# EUROPEAN PATENT APPLICATION

(11) **EP 4 231 698 A1**
(43) Date of publication of application: **23.08.2023**
(21) Application number: 20957049.8
(22) Date of filing: 14.10.2020
(51) Int. Cl.: H04W 24/10

(54) **WLAN SENSING METHOD, WLAN SENSING APPARATUS AND STORAGE MEDIUM**

(71) Applicant: Beijing Xiaomi Mobile Software Co., Ltd., Beijing 100085 (CN)
(72) Inventor: DONG, Xiandong, Beijing 100085 (CN)
(74) Representative: dompatent von Kreisler Selting Werner - Partnerschaft von Patent- und Rechtsanwälten mbB
(86) International application number: PCT/CN2020/120902
(87) International publication number: WO 2022/077268

(57) **Abstract**

The present disclosure relates to a WLAN sensing method, a WLAN sensing apparatus and a storage medium. The WLAN sensing method, applied to a station and comprising: determining a WLAN sensing periodic request frame, the WLAN sensing periodic request frame comprising a first periodic information element of a station for WLAN sensing, and the first periodic information element being used by the station for periodic WLAN sensing; and sending the WLAN sensing periodic request frame. According to the present disclosure, a WLAN sensing message is periodically initiated in a preconfigured or defined period, and the effect of reducing communication interference of other stations can be realized.

## Description

### TECHNICAL FIELD

The present disclosure relates to the technical field of wireless communications, particularly, to a method for WLAN sensing, an apparatus for WLAN sensing, and a storage medium.

### BACKGROUND

Wireless local area network sensing (WLAN sensing) is generally applied to location discovery in dense scenarios, and in application scenarios of proximity detection and/or presence detection and the like. And WLAN sensing procedure may be that the initiator initiates WLAN sensing, and the plurality of responders respond to it.

In the related art, a station (STA) is used as an initiator of WLAN sensing, and a wireless access point (AP) is used as a responder of WLAN sensing to communicate with the station. However, during a station that supports WLAN sensing initiating WLAN sensing to an AP that supports WLAN sensing, communication between a station and a station may occur. Therefore, when a station that supports WLAN sensing communicates with a station under the control of the AP, the situation of mutual interference is easily caused.

### SUMMARY

In order to overcome the problems existing in the related art, the present disclosure provides a method for WLAN sensing, an apparatus for WLAN sensing, and a storage medium.

According to a first aspect of the embodiments of the present disclosure, there is provided a method for WLAN sensing applied to a station, including:

determining a WLAN sensing period request frame, the WLAN sensing period request frame including a first period information element for the station to perform WLAN sensing, and the first period information element being used to perform periodic WLAN sensing by the station; and sending the WLAN sensing period request frame.

In an embodiment, the method further includes:
receiving a WLAN sensing period response frame, the WLAN sensing period response frame including a second period information element of a wireless access point (AP); and determining, in response to the second period information element being the same as the first period information element, to periodically initiate a WLAN sensing message.

In an embodiment, the WLAN sensing period request frame includes at least one of following:
a period information element ID, a byte length, a WLAN sensing period offset, a WLAN sensing duration, a WLAN sensing interval, a number of WLAN sensing repetition, and connection information.

In an embodiment, the WLAN sensing period offset is determined based on a first WLAN sensing period and a target beacon transmission time.

In an embodiment, the WLAN sensing duration is determined based on a WLAN sensing period.

In an embodiment, the WLAN sensing interval is determined based on an interval sent between continuous WLAN sensing periods.

In an embodiment, the number of WLAN sensing repetition is determined based on a number of the WLAN sensing period request frame.

In an embodiment, a number of times of sending the first period information element is determined based on the number of WLAN sensing repetition;
or
the number of times of sending the first period information element is determined based on a WLAN sensing application.

In an embodiment, the method further includes:
receiving first information, the first information identifying WLAN sensing capability information supported by the AP.

In an embodiment, the method further includes:
sending second information, the second information identifying WLAN sensing capability information supported by the station.

In an embodiment, the second period information element includes at least one of following:
a period information element ID, a byte length, a WLAN sensing period offset, a WLAN sensing duration, a WLAN sensing interval, a number of WLAN sensing repetition, connection information, and a status code.

In an embodiment, the status code is determined based on the first period information element and the second period information element.

According to a second aspect of the embodiments of the present disclosure, there is provided a method for WLAN sensing, applied to a wireless access point (AP), including:
receiving a WLAN sensing period request frame, the WLAN sensing period request frame including a first period information element for a station to perform WLAN sensing, and the first period information element being used to perform periodic WLAN sensing by the station.

In an embodiment, the method further includes:
determining to accept the WLAN sensing period request frame, and setting a second period information element to be the same as the first period information element.

In an embodiment, the method further includes:
sending a WLAN sensing period response frame, the WLAN sensing period response frame including the second period information element of the wireless access point (AP).

In an embodiment, the WLAN sensing period request frame includes at least one of following:
a period information element ID, a byte length, a WLAN sensing period offset, a WLAN sensing duration, a WLAN sensing interval, a number of WLAN sensing repetition, and connection information.

In an embodiment, the WLAN sensing period offset is determined based on a first WLAN sensing period and a target beacon transmission time.

In an embodiment, the WLAN sensing duration is determined based on a WLAN sensing period.

In an embodiment, the WLAN sensing interval is determined based on an interval sent between continuous WLAN sensing periods.

In an embodiment, the number of WLAN sensing repetition is determined based on a number of the WLAN sensing period request frame.

In an embodiment, a number of times of sending the first period information element is determined based on the number of WLAN sensing repetition;
or
the number of times of sending the first period information element is determined based on a WLAN sensing application.

In an embodiment, the method further includes:
sending first information, the first information identifying WLAN sensing capability information supported by the AP.

In an embodiment, the method further includes:
receiving second information, the second information identifying WLAN sensing capability information supported by the station.

In an embodiment, the second period information element includes at least one of following:
a period information element ID, a byte length, a WLAN sensing period offset, a WLAN sensing duration, a WLAN sensing interval, a number of WLAN sensing repetition, connection information, and a status code.

In an embodiment, the status code is determined based on the first period information element and the second period information element.

According to a third aspect of the embodiments of the present disclosure, there is provided an apparatus for WLAN sensing, applied to a station, including:
a determination module, configured to determine a WLAN sensing period request frame, the WLAN sensing period request frame including a first period information element for the station to perform WLAN sensing, and the first period information element being used to perform periodic WLAN sensing by the station; and a sending module, configured to send the WLAN sensing period request frame.

In an embodiment, the determination module is further configured to:
receive a WLAN sensing period response frame, the WLAN sensing period response frame including a second period information element of a wireless access point (AP); and determine, in response to the second period information element being the same as the first period information element, to periodically initiate a WLAN sensing message.

In an embodiment, the WLAN sensing period request frame includes at least one of following:
a period information element ID, a byte length, a WLAN sensing period offset, a WLAN sensing duration, a WLAN sensing interval, a number of WLAN sensing repetition, and connection information.

In an embodiment, the WLAN sensing period offset is determined based on a first WLAN sensing period and a target beacon transmission time.

In an embodiment, the WLAN sensing duration is determined based on a WLAN sensing period.

In an embodiment, the WLAN sensing interval is determined based on an interval sent between continuous WLAN sensing periods.

In an embodiment, the number of WLAN sensing repetition is determined based on a number of the WLAN sensing period request frame.

In an embodiment, a number of times of sending the first period information element is determined based on the number of WLAN sensing repetition;
or
the number of times of sending the first period information element is determined based on a WLAN sensing application.

In an embodiment, the apparatus further includes:
receiving first information, the first information identifying the WLAN sensing capability information supported by the AP.

In an embodiment, the apparatus further includes:
sending second information, the second information identifying the WLAN sensing capability information supported by the station.

In an embodiment, the second period information element includes at least one of the following:
a period information element ID, a byte length, a WLAN sensing period offset, a WLAN sensing duration, a WLAN sensing interval, a number of WLAN sensing repetition, connection information, and a status code.

In an embodiment, the status code is determined based on the first period information element and the second period information element.

According to a fourth aspect of the embodiments of the present disclosure, there is provided an apparatus for WLAN sensing applied to a wireless access point (AP), including:
a receiving module, configured to receive a WLAN sensing period request frame, the WLAN sensing period request frame including a first period information element for a station to perform WLAN sensing, and the first period information element being used to perform periodic WLAN sensing by the station.

In an embodiment, the apparatus further includes:
determining to accept the WLAN sensing period request frame, and setting the second period information element to be the same as the first period information element.

In an embodiment, the apparatus further includes:
sending a WLAN sensing period response frame, the WLAN sensing period response frame including a second period information element of the wireless access point (AP).

In an embodiment, the WLAN sensing period request frame includes at least one of following:
a period information element ID, a byte length, a WLAN sensing period offset, a WLAN sensing duration, a WLAN sensing interval, a number of WLAN sensing repetition, and connection information.

In an embodiment, the WLAN sensing period offset is determined based on a first WLAN sensing period and a target beacon transmission time.

In an embodiment, the WLAN sensing duration is determined based on a WLAN sensing period.

In an embodiment, the WLAN sensing interval is determined based on an interval sent between continuous WLAN sensing periods.

In an embodiment, the number of WLAN sensing repetition is determined based on a number of the WLAN sensing period request frame.

In an embodiment, a number of times of sending the first period information element is determined based on the number of WLAN sensing repetition;
or
the number of times of sending the first period information element is determined based on a WLAN sensing application.

In an embodiment, the apparatus further includes:
sending first information, the first information identifying the WLAN sensing capability information supported by the AP.

In an embodiment, the apparatus further includes:
receiving second information, the second information identifying the WLAN sensing capability information supported by the station.

In an embodiment, the second period information element includes at least one of the following:
a period information element ID, a byte length, a WLAN sensing period offset, a WLAN sensing duration, a WLAN sensing interval, a number of WLAN sensing repetition, connection information, and a status code.

In an embodiment, the status code is determined based on the first period information element and the second period information element.

According to a fifth aspect of the embodiments of the present disclosure, there is provided an apparatus for WLAN sensing, including:
a processor; a memory configured storing an instruction executable by the processor, where the processor is configured to execute the method for WLAN sensing according to the first aspect or any one of the embodiments of the first aspect, or configured to execute the method for WLAN sensing according to the second aspect or any one of the embodiments of the second aspect.

According to a sixth aspect of the embodiments of the present disclosure, there is provided a non-transitory computer-readable storage medium, when an instruction in the storage medium is executed by a processor of a mobile terminal, the mobile terminal is enabled to execute the method for WLAN sensing according to the first aspect or any one of the embodiments of the first aspect; or the mobile terminal is enabled to execute the method for WLAN sensing according to the second aspect or any one of the embodiments of the second aspect.

The technical solution provided in the embodiments of the present disclosure may include the following beneficial effects: a WLAN sensing message may be periodically initiated within a preset or defined period by negotiating a WLAN sensing period between the station and the AP, and the effect of reducing communication interference of other stations may be achieved.

It should be understood that, the above general description and the following detailed description are merely exemplary and explanatory, and cannot limit the present disclosure.

### BRIEF DESCRIPTION OF THE DRAWINGS

The accompanying drawings here, which are incorporated in and constitute a part of this specification, illustrate embodiments consistent with the present disclosure and, together with the description, serve to explain the principles of the present disclosure.
FIG. 1 shows a schematic diagram of a WLAN sensing communication system applicable to embodiments of the present disclosure.
FIG. 2 shows a schematic diagram of WLAN sensing between a station and a station under the control of an AP according to embodiments of the present disclosure.
FIG. 3A to FIG. 3B show schematic diagrams of formats of a quiet time period mechanism according to embodiments of the present disclosure.
FIG. 4 is a flowchart of a method for WLAN sensing illustrated according to an exemplary embodiment.
FIG. 5 is a flowchart of another method for WLAN sensing illustrated according to an exemplary embodiment.
FIG. 6 is a schematic diagram of a WLAN sensing period request frame of a method for WLAN sensing illustrated according to an exemplary embodiment.
FIG. 7 is a schematic diagram of a WLAN sensing period response frame of a method for WLAN sensing illustrated according to an exemplary embodiment.
FIG. 8A to FIG. 8C are schematic diagrams of formats of a capability information element of a method for WLAN sensing illustrated according to an exemplary embodiment.
FIG. 9 is a flowchart of another method for WLAN sensing illustrated according to an exemplary embodiment.
FIG. 10 is a block diagram of an apparatus for WLAN sensing illustrated according to an exemplary embodiment.
FIG. 11 is a block diagram of another apparatus for WLAN sensing illustrated according to an exemplary embodiment.
FIG. 12 is a block diagram of an apparatus for WLAN sensing illustrated according to an exemplary embodiment.
FIG. 13 is a block diagram of an apparatus for WLAN sensing illustrated according to an exemplary embodiment.

### DETAILED DESCRIPTION

Exemplary embodiments will be described in detail here, examples of which are illustrated in the accompanying drawings. The following description refers to the accompanying drawings in which the same numbers in different drawings represent the same or similar elements unless otherwise represented. The implementations described in the following exemplary embodiments do not represent all implementations consistent with the present disclosure. On the contrary, they are merely examples of apparatuses and methods consistent with some aspects of the present disclosure as detailed in the appended claims.

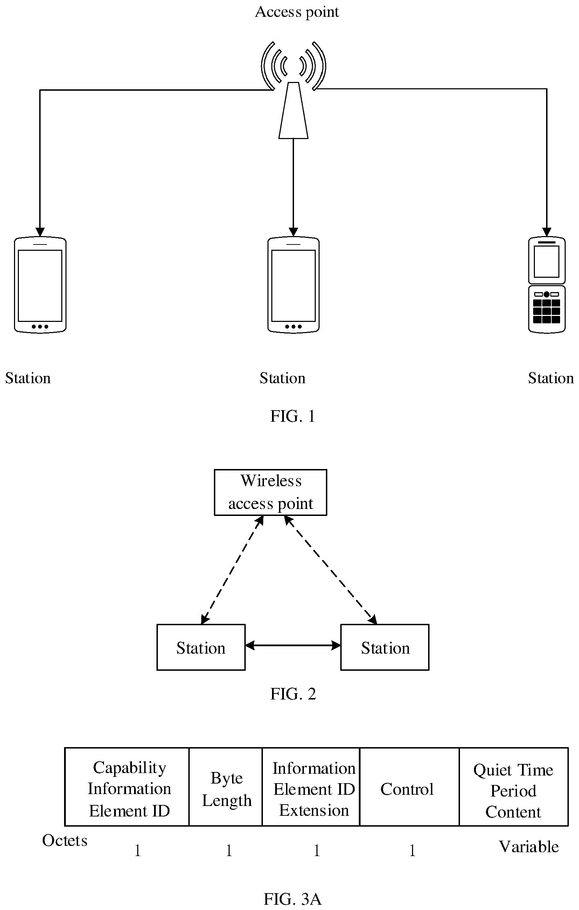

In the wireless communication technology, an 802.1 1bf task group is established in an IEEE 802.11 task group to study WLAN sensing. Among them, WLAN sensing is generally applied to location discovery in dense scenarios (for example family environment and enterprise environment, etc.), and in application scenarios of proximity detection and/or presence detection and the like. FIG. 1 shows a schematic diagram of a WLAN sensing communication system applicable to embodiments of the present disclosure. As shown in FIG. 1, wireless communication is performed between a station and an AP. And the WLAN sensing procedure may be that the station initiates WLAN sensing, and the AP responder responds to it.

Among them, the station involved in the present disclosure may be understood as a user terminal in a wireless local area network. The user terminal may be referred to as a user equipment (UE), a mobile station (MS), a mobile terminal (MT), etc., and is a device for providing voice and/or data connectivity to a user. For example, the terminal may be a handheld device, a vehicle-mounted device, and the like, which has a wireless connection function. Currently, examples of some terminals are: a mobile phone, a pocket personal computer (PPC), a palmtop computer, a personal digital assistant (PDA), a notebook computer, a tablet computer, a wearable device, an Internet of Things (IoT) client, or a vehicle-mounted device, and the like. In the present disclosure, an AP refers to a device, a router, and the like for a user terminal of the wireless local area network to access the network.

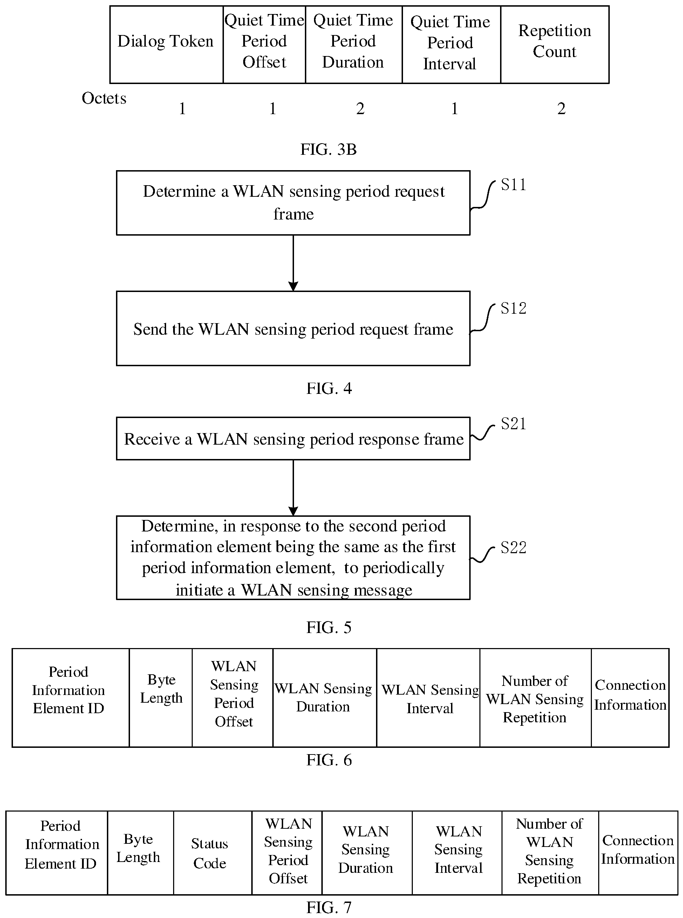

FIG. 2 shows a schematic diagram of WLAN sensing between a station and a station under the control of an AP according to embodiments of the present disclosure. As shown in FIG. 2, in the related art, a manner of performing WLAN sensing between a station and a station under the control of the AP may refer to a quiet time period (QTP) mechanism in the standard. FIG. 3A to FIG. 3B show schematic diagrams of formats of a quiet time period mechanism according to embodiments of the present disclosure. As shown in FIG. 3A, an information element ID, a byte length, an information element ID extension, a control, and quiet time period content are included. Among them, *Octets* identifies an octet, and *variable* identifies a variable. As shown in FIG. 3B, a dialog token, a quiet time period offset, a quiet time period duration, a quiet time period interval, a repetition count, and a particular service identifier are included. Among them, *Octets* identifies an octet and *variable* identifies a variable. Specifically, the station supporting the QTP sends a QTP request to the AP supporting the QTP, and communication between the station and the station is performed during the QTP.

However, although there is a QTP mechanism in the related art, that may be used for a communication mechanism between a station and a station, however, there may be a situation of one initiator and a plurality of responders in one process. For example, in the procedure of IEEE 802. 1 1bf, there may be one initiator and there is a plurality of responders in one process of 802.11bf. At this time, if a QTP mechanism is used for a communication mechanism between a station and a station, all the stations are initiators for communication between the station and the station. That is, it can be understood that each station needs to send a QTP request. Therefore, it can be understood by the QTP mechanism that when the station supporting WLAN sensing communicates with a station under the control of the AP, the situation of mutual interference is easily caused.

Therefore, the present disclosure provides a method for WLAN sensing.

FIG. 4 is a flowchart of a method for WLAN sensing illustrated according to an exemplary embodiment. As shown in FIG. 4, the method for WLAN sensing is applied in a station, and includes the following steps.

In step S11, a WLAN sensing period request frame is determined.

In step S12, the WLAN sensing period request frame is sent.

In the embodiments of the present disclosure, the station determines the WLAN sensing period request frame according to the specific application of WLAN sensing supported by the station. The WLAN sensing period request frame includes a first period information element for the station to perform WLAN sensing, and the first period information element is used to perform periodic WLAN sensing by the station. The station sends the determined WLAN sensing period request frame. After receiving the WLAN sensing period request frame sent by the station, the AP sends a WLAN sensing period response frame to the station in response to the received WLAN sensing period request frame. The station receives the WLAN sensing period response frame sent by the AP, and needs to perform the following steps.

FIG. 5 is a flowchart of a method for WLAN sensing illustrated according to an exemplary embodiment. As shown in FIG. 5, the method for WLAN sensing further includes the following steps.

In step S21, a WLAN sensing period response frame is received.

In the embodiments of the present disclosure, the WLAN sensing period response frame includes a second period information element of the wireless access point (AP).

In step S22, in response to the second period information element being the same as the first period information element, it is determined to periodically initiate a WLAN sensing message.

In the embodiments of the present disclosure, the station determines a second period information element included in the received WLAN sensing period response frame, and matches the second period information element with the first period information element of the station. If the second period information element is the same as the first period information element of the station, it is determined that the AP agrees to the WLAN sensing period request of the station. At this time, the status code in the second period information element is to respond, and the station determines to periodically initiate a WLAN sensing message. In the embodiments of the present disclosure, the WLAN sensing period response frame sent by the AP may be a broadcast frame. The status code in the second period information element is to respond.

In another manner, if not accepting the WLAN sensing period request frame sent by the station, the AP determines a second period information element different from the first period information element in the WLAN sensing period response frame. At this time, the status code in the second period information element is not to respond. The station determines that the second period information element in the WLAN sensing period response frame sent by the AP is different from the first period information element, and determines not to periodically initiate a WLAN sensing message.

FIG. 6 is a schematic diagram of a WLAN sensing period request frame of a method for WLAN sensing illustrated according to an exemplary embodiment. In the embodiments of the present disclosure, the format of the first period information element included in the WLAN sensing period request frame is as shown in FIG. 6. In the embodiments of the present disclosure, the WLAN sensing period request frame includes at least one of the following:

the period information element ID, the byte length, the WLAN sensing period offset, the WLAN sensing duration, the WLAN sensing interval, the number of WLAN sensing repetition, and the connection information.

Among them, in the embodiments of the present disclosure, the WLAN sensing period offset is determined based on a first WLAN sensing period (WSP) and a target beacon transmission time (TBTT). In other words, the WLAN sensing period offset may be set as the offset between the first WLAN sensing period (WSP) and the TBTT represented by *Tus.*

The WLAN sensing duration is determined based on a WLAN sensing period. In other words, the WLAN sensing duration may be set as the duration of the WLAN sensing period, and the unit may be 32 µs. Certainly, the definition of the unit is merely for illustration, and is not specifically limited to the WLAN sensing duration of the present disclosure.

The WLAN sensing interval is determined based on an interval sent between continuous WLAN sensing periods. In other words, taking two continuous WLAN sensing periods as an example, the WLAN sensing interval may be set as a request interval between two continuous WSP starts.

The number of WLAN sensing repetition is determined based on the number of the WLAN sensing period request frame. In other words, the number of WLAN sensing repetition may be set as the number of the WLAN sensing period request frame.

In an exemplary embodiment of the present disclosure, the number of times that the station sends the first period information element may be determined according to the number of WLAN sensing repetition. Alternatively, the number of times that the station sends the first period information element may also be determined according to a specific application that may be implemented by WLAN sensing. Among them, the specific application that may be implemented by WLAN sensing may be identifying support for location discovery, and may be identifying action detection, for example, proximity detection or presence detection.

In the embodiments of the present disclosure, the first period information element may further include the number of times that the station performs WLAN sensing, that is used to identify the number of times that the station performs WLAN sensing within one WLAN sensing period. Among them, the connection information may identify frequency band information such as 2.4 GHz, 5 GHz, 6 GHz, or 60 GHz, etc. It should be noted that, if the first period information element includes the connection information, the period information element ID, the byte length, the WLAN sensing period offset, the WLAN sensing duration, the WLAN sensing interval, and the number of WLAN sensing repetition in the first period information element in the foregoing embodiments all need to be repeated.

Among them, the first period information element and the second period information element include the same information element. In order to facilitate description in the present disclosure, the period information element sent by the station is referred to as the first period information element, and the period information element sent by the AP is referred to as the second period information element. FIG. 7 is a schematic diagram of a WLAN sensing period response frame of a method for WLAN sensing illustrated according to an exemplary embodiment. The format of the second period information element included in the WLAN sensing period response frame is as shown in FIG. 7.

In the embodiments of the present disclosure, it should be understood that before the station sends the WLAN sensing period request frame and accepts the WLAN sensing period response frame sent by the AP, capability information interaction is needed during the process of initial association between the AP and the station. The station sends the second information, and the second information identifies the WLAN sensing capability information supported by the station, so as to inform the AP of the capability information supported by the station. The AP determines the capability supported by the station according to the received WLAN sensing capability information sent by the station. The AP sends the first information, and the first information identifies the WLAN sensing capability information supported by the AP. The AP has informed the station of the wireless perception capability information supported by itself, and the station determines the wireless perception capability information supported by the AP. In the embodiments of the present disclosure, the station may carry the second information in the association request frame, or carry the second information in the re-association request frame. The AP may carry the first information in the association response frame, or carry the first information in the re-association response frame, or carry the first information in the target beacon frame.

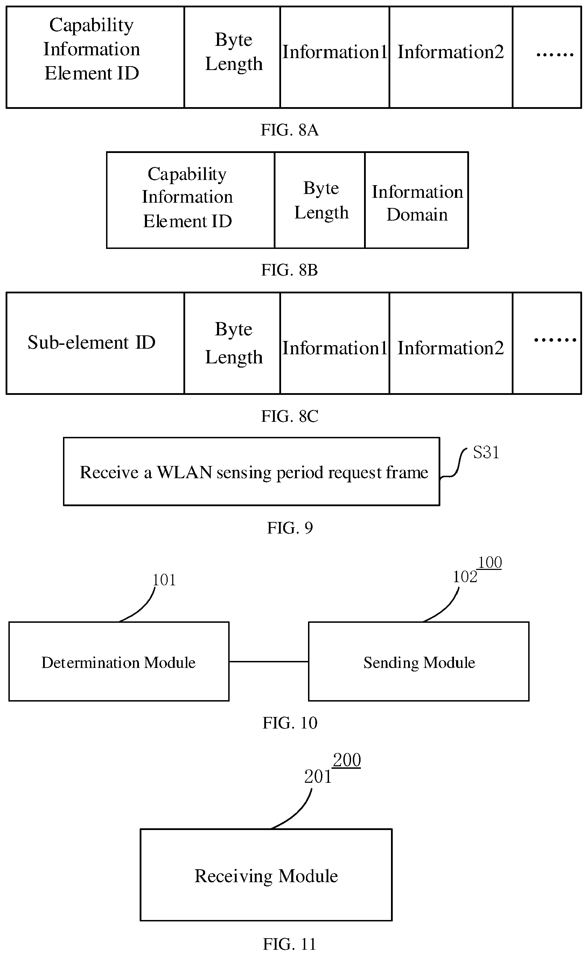

FIG. 8A to FIG. 8C are schematic diagrams of formats of a capability information element of a method for WLAN sensing illustrated according to an exemplary embodiment. In the embodiments of the present disclosure, the format of the second information element of the station or the first information element of the AP may be a frame format as shown in FIG. 8A, or a frame format as shown in FIG. 8B. Among them, if the format of the first information or the second information is the frame format as shown in FIG. 8B, the information domain included in the frame format as shown in FIG. 8B includes the first information or the second information, and the format of the information domain is as shown in FIG. 8C, including the sub-element ID, the byte length, the supported application (for example, *Information1* identifying support for location discovery, and *Information2* identifying support for proximity detection or presence detection).

The method for WLAN sensing provided in the embodiments of the present disclosure may be applicable to a situation that a station communicates with an AP in a one-to-one manner. If the station and the AP determine to periodically initiate a WLAN sensing message, the station participating in the periodic initiation of the WLAN sensing message receives a P2P message frame, such as a WLAN sensing initial doing request frame. The WLAN sensing of other stations that do not participate in the periodic initiation of the WLAN sensing message sets its network allocation vector (NAV) to be busy. Certainly, the method for WLAN sensing provided in the embodiments of the present disclosure may also be applicable to other situations of the station and the AP. If there is a retransmission delay value (backoff), it is determined that the backoff is decremented within a WLAN sensing period for periodically initiating the WLAN sensing message. For a station that does not support WLAN sensing, the NAV of the station that does not support WLAN sensing is set to be busy, and is decremented within a WLAN sensing period for periodically initiating the WLAN sensing message.

Based on the same or similar concept, embodiments of the present disclosure further provide a method for WLAN sensing.

FIG. 9 is a flowchart of a method for WLAN sensing illustrated according to an exemplary embodiment. As shown in FIG. 9, the method for WLAN sensing is applied to a wireless access point (AP), and includes the following steps.

In step S31, a WLAN sensing period request frame is received.

In the embodiments of the present disclosure, the WLAN sensing period request frame includes a first period information element for a station to perform WLAN sensing, and the first period information element is used to perform periodic WLAN sensing by the station.

The station determines the WLAN sensing period request frame according to the specific application of WLAN sensing supported by the station. The WLAN sensing period request frame includes a first period information element for a station to perform WLAN sensing, and the first period information element is used to perform periodic WLAN sensing by the station. The station sends the determined WLAN sensing period request frame. After receiving the WLAN sensing period request frame sent by the station, in response to the received WLAN sensing period request frame, if it is determined to accept the WLAN sensing period request frame, the AP sets the second period information element to be the same as the first period information element. A WLAN sensing period response frame is sent to the station. The station receives the WLAN sensing period response frame sent by the AP, and needs to perform the following steps.

In the embodiment of the present disclosure, the WLAN sensing period response frame includes a second period information element of the wireless access point (AP). The station determines a second period information element included in the received WLAN sensing periodic response frame, and matches the second period information element with the first period information element of the station. If the second period information element is the same as the first period information element of the station, it is determined that the AP agrees to the WLAN sensing period request of the station. At this time, the status code in the second period information element is to respond, and the station determines to periodically initiate a WLAN sensing message. In the embodiments of the present disclosure, the WLAN sensing period response frame sent by the AP may be a broadcast frame. The status code in the second period information element is to respond.

In another manner, if not accepting the WLAN sensing period request frame sent by the station, the AP determines a second period information element different from the first period information element in the WLAN sensing period response frame. At this time, the status code in the second period information element is not to respond. The station determines that the second period information element in the WLAN sensing period response frame sent by the AP is different from the first period information element, and does not periodically initiate the WLAN sensing message.

FIG. 6 is a schematic diagram of a WLAN sensing period request frame of a method for WLAN sensing illustrated according to an exemplary embodiment. In the embodiments of the present disclosure, the format of the first period information element included in the WLAN sensing period request frame is as shown in FIG. 6. In the embodiments of the present disclosure, the WLAN sensing period request frame includes at least one of the following:

the period information element ID, the byte length, the WLAN sensing period offset, the WLAN sensing duration, the WLAN sensing interval, the number of WLAN sensing repetition, and the connection information.

Among them, in the embodiments of the present disclosure, the WLAN sensing period offset is determined based on a first WLAN sensing period (WSP) and a target beacon transmission time (TBTT). In other words, the WLAN sensing period offset may be set as the offset between the first WLAN sensing period (WSP) and the TBTT represented by *Tus.*

The WLAN sensing duration is determined based on a WLAN sensing period. In other words, the WLAN sensing duration may be set as the duration of the WLAN sensing period, and the unit may be 32 µs. Certainly, the definition of the unit is merely for illustration, and is not specifically limited to the WLAN sensing duration of the present disclosure.

A WLAN sensing interval is determined based on an interval sent between continuous WLAN sensing periods. In other words, taking two continuous WLAN sensing periods as an example, the WLAN sensing interval may be set as a request interval between two continuous WSP starts.

The number of WLAN sensing repetition is determined based on the number of the WLAN sensing period request frame. In other words, the number of WLAN sensing repetition may be set as the number of WLAN sensing period request frame.

In an exemplary embodiment of the present disclosure, the number of times that the station sends the first period information element may be determined according to the number of WLAN sensing repetition. Alternatively, the number of times that the station sends the first period information element may also be determined according to a specific application that may be implemented by WLAN sensing. Among them, the specific application that may be implemented by WLAN sensing may be identifying support for location discovery, and may be identifying action detection, for example, proximity detection or presence detection.

In the embodiments of the present disclosure, the first period information element may further include the number of times that the station performs WLAN sensing, that is used to identify the number of times that the station performs WLAN sensing within one WLAN sensing period. Among them, the connection information may identify frequency band information such as 2.4 GHz, 5 GHz, 6 GHz, or 60 GHz, etc. It should be noted that, if the first period information element includes the connection information, the period information element ID, the byte length, the WLAN sensing period offset, the WLAN sensing duration, the WLAN sensing interval, and the number of WLAN sensing repetition in the first period information element in the foregoing embodiment need to be repeated.

Among them, the first period information element and the second period information element include the same information element. In order to facilitate description in the present disclosure, the period information element sent by the station is referred to as the first period information element, and the period information element sent by the AP is referred to as the second period information element. FIG. 7 is a schematic diagram of a WLAN sensing period response frame of a method for WLAN sensing illustrated according to an exemplary embodiment. The format of the second period information element included in the WLAN sensing period response frame is as shown in FIG. 7.

In the embodiments of the present disclosure, it should be understood that before the station sends the WLAN sensing period request frame and accepts the WLAN sensing period response frame sent by the AP, capability information interaction is needed during the process of initial association between the AP and the station. The station sends the second information, and the second information identifies the WLAN sensing capability information supported by the station, so as to inform the AP of the capability information supported by the station. The AP determines the capability supported by the station according to the received WLAN sensing capability information sent by the station. The AP sends the first information, and the first information identifies the WLAN sensing capability information supported by the AP. The AP has informed the station of the wireless perception capability information supported by the AP, and the station determines the wireless perception capability information supported by the AP. In the embodiments of the present disclosure, the station may carry the second information in the association request frame, or carry the second information in the re-association request frame. The AP may carry the first information in the association response frame, or carry the first information in the re-association response frame.

FIG. 8A to FIG. 8C are schematic diagrams of formats of a capability information element of a method for WLAN sensing illustrated according to an exemplary embodiment. In the embodiments of the present disclosure, the format of the second information element of the station or the first information element of the AP may be a frame format as shown in FIG. 8A, or a frame format as shown in FIG. 8B. Among them, if the format of the first information or the second information is the frame format as shown in FIG. 8B, the information domain included in the frame format as shown in FIG. 8B includes the first information or the second information, and the format of the information domain is as shown in FIG. 8C, including the sub-element ID, the byte length, the supported application (for example, *Information1* identifying support for location discovery, and *Information2* identifying support for proximity detection or presence detection).

The method for WLAN sensing provided in the embodiments of the present disclosure may be applicable to a situation that a station communicates with an AP in one-to-one manner. If the station and the AP determine to periodically initiate a WLAN sensing message, the station participating in the periodic initiation of the WLAN sensing message receives a P2P message frame, such as a WLAN sensing initial doing request frame. The WLAN sensing of other stations that do not participate in the periodic initiation of the WLAN sensing message sets its network allocation vector (NAV) to be busy. Certainly, the method for WLAN sensing provided in the embodiments of the present disclosure may also be applicable to other situations of the station and the AP. If there is a retransmission delay value (backoff), it is determined that the backoff is decremented within a WLAN sensing period for periodically initiating the WLAN sensing message. For a station that does not support WLAN sensing, the NAV of the station that does not support WLAN sensing is set to be busy, and is decremented within a WLAN sensing period for periodically initiating the WLAN sensing message.

Based on the same concept, embodiments of the present disclosure further provide an apparatus for WLAN sensing.

It may be understood that, in order to implement the foregoing functions, the apparatus for WLAN sensing provided in the embodiments of the present disclosure includes a hardware structure and/or a software module corresponding to each function. Combining the units and algorithm steps of each example disclosed in the embodiments of the present disclosure, the embodiments of the present disclosure can be implemented in the form of hardware or a combination of hardware and computer software. Whether a certain function is executed in the manner of hardware or computer software driving hardware, depends on the specific application and design constraints of the technical solution. Those skilled in the art may use different methods to implement the described functions for each specific application, but such implementation should not be considered beyond the scope of the technical solution of the embodiments of the present disclosure.

FIG. 10 is a block diagram of an apparatus 100 for WLAN sensing illustrated according to an exemplary embodiment. Referring to FIG. 10, the apparatus is applied to a station, and the apparatus includes a determination module 101 and a sending module 102

The determining module 101 is configured to determine a WLAN sensing period request frame, the WLAN sensing period request frame includes a first period information element for the station to perform WLAN sensing, and the first period information element is used to perform periodic WLAN sensing by the station. The sending module 102 is configured to send a WLAN sensing period request frame.

In the embodiments of the present disclosure, the determination module 101 is further configured to receive a WLAN sensing period response frame, and the WLAN sensing period response frame includes a second period information element of the wireless access point (AP). In response to the second period information element being the same as the first period information element, it is determined to periodically initiate a WLAN sensing message.

In the embodiments of the present disclosure, the WLAN sensing period request frame includes at least one of the following:
the period information element ID, the byte length, the WLAN sensing period offset, the WLAN sensing duration, the WLAN sensing interval, the number of WLAN sensing repetition, and the connection information.

In the embodiments of the present disclosure, the WLAN sensing period offset is determined based on a first WLAN sensing period and a target beacon transmission time.

In the embodiments of the present disclosure, the WLAN sensing duration is determined based on a WLAN sensing period.

In the embodiments of the present disclosure, the WLAN sensing interval is determined based on an interval sent between continuous WLAN sensing periods.

In the embodiments of the present disclosure, the number of WLAN sensing repetition is determined based on a number of the WLAN sensing period request frame.

In the embodiments of the present disclosure, the number of times of sending the first period information element is determined based on the number of WLAN sensing repetition.

Or

The number of times of sending the first period information element is determined based on a WLAN sensing application.

In the embodiments of the present disclosure, the apparatus for WLAN sensing further includes:
receiving first information, where the first information identifies the WLAN sensing capability information supported by the AP.

In the embodiments of the present disclosure, the apparatus for WLAN sensing further includes:
sending second information, where the second information identifies the WLAN sensing capability information supported by the station.

In the embodiments of the present disclosure, the second period information element includes at least one of the following:
the period information element ID, the byte length, the WLAN sensing period offset, the WLAN sensing duration, the WLAN sensing interval, the number of WLAN sensing repetition, the connection information, and the status code.

In the embodiments of the present disclosure, the status code is determined based on the first period information element and the second period information element.

FIG. 11 is a block diagram of an apparatus 200 for WLAN sensing illustrated according to an exemplary embodiment. Referring to FIG. 11, it is applied to a wireless access point (AP), and includes a receiving module 201.

The receiving module 201 is configured to receive a WLAN sensing period request frame, the WLAN sensing period request frame includes a first period information element for a station to perform WLAN sensing, and the first period information element is used to perform periodic WLAN sensing by the station.

In the embodiments of the present disclosure, the apparatus for WLAN sensing further includes:
sending a WLAN sensing period response frame, where the WLAN sensing period response frame includes a second period information element of the wireless access point (AP).

In the embodiments of the present disclosure, the apparatus for WLAN sensing further includes:
determining to accept the WLAN sensing period request frame, and setting the second period information element to be the same as the first period information element.

In the embodiments of the present disclosure, the WLAN sensing period request frame includes at least one of the following:
the period information element ID, the byte length, the WLAN sensing period offset, the WLAN sensing duration, the WLAN sensing interval, the number of WLAN sensing repetition, and the connection information.

In the embodiments of the present disclosure, the WLAN sensing period offset is determined based on a first WLAN sensing period and a target beacon transmission time.

In the embodiments of the present disclosure, the WLAN sensing duration is determined based on a WLAN sensing period.

In the embodiments of the present disclosure, the WLAN sensing interval is determined based on an interval sent between continuous WLAN sensing periods.

In the embodiments of the present disclosure, the number of WLAN sensing repetition is determined based on a number of the WLAN sensing period request frame.

In the embodiments of the present disclosure, the number of times of sending the first period information element is determined based on the number of WLAN sensing repetition.

Or

The number of times of sending the first period information element is determined based on a WLAN sensing application.

In the embodiments of the present disclosure, the apparatus for WLAN sensing further includes:
sending first information, where the first information identifies the WLAN sensing capability information supported by the AP.

In the embodiments of the present disclosure, the apparatus for WLAN sensing further includes:
receiving second information, where the second information identifies the WLAN sensing capability information supported by the station.

In the embodiments of the present disclosure, the second period information element includes at least one of the following:
the period information element ID, the byte length, the WLAN sensing period offset, the WLAN sensing duration, the WLAN sensing interval, the number of WLAN sensing repetition, the connection information, and the status code.

In the embodiments of the present disclosure, the status code is determined based on the first period information element and the second period information element.

With regard to the apparatus in the above embodiments, the specific manner in which each module performs an operation has been described in detail in the embodiments related to the method, and will not be described in detail here.

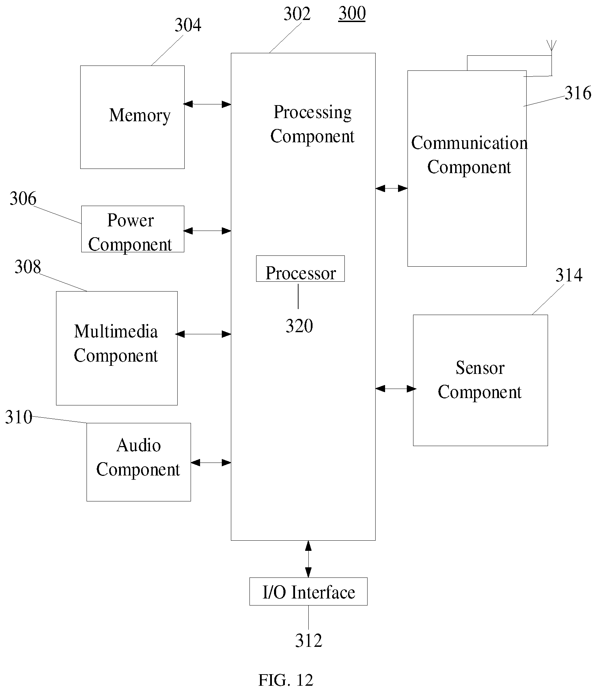

FIG. 12 is a block diagram of an apparatus 300 for WLAN sensing illustrated according to an exemplary embodiment. For example, the apparatus 300 may be a mobile phone, a computer, a digital broadcast terminal, a messaging device, a game console, a tablet device, a medical device, a fitness device, a personal digital assistant, etc.

Referring to FIG. 12, apparatus 300 may include one or more of the following components: processing component 302, memory 304, power component 306, multimedia component 308, audio component 310, input/output (I/O) interface 312, sensor component 314, and communication component 316.

The processing component 302 generally controls the overall operation of the apparatus 300, such as operations associated with display, telephone calls, data communications, camera operations, and recording operations. The processing component 302 may include one or more processors 320 to execute instructions to complete all or part of the steps of the methods described above. In addition, the processing component 302 may include one or more modules to facilitate interaction between the processing component 302 and other components. For example, the processing component 302 may include a multimedia module to facilitate interaction between the multimedia component 308 and the processing component 302.

The memory 304 is configured to store various types of data to support operation at the apparatus 300. Examples of such data include instructions for any application or method used to be operated on apparatus 300, contact data, phonebook data, messages, pictures, videos, and the like. The memory 304 may be implemented by any type of volatile or nonvolatile storage device or a combination of them, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic disk, or an optical disk.

The power component 306 provides electrical power to various components of the apparatus 300. The power component 306 may include a power management system, one or more power sources, and other components associated with generating, managing, and distributing power for the apparatus 300.

The multimedia component 308 includes a screen providing an output interface between the apparatus 300 and a user. In some embodiments, the screen may include a liquid crystal display (LCD) and a touch panel (TP). If the screen includes a touch panel, the screen may be implemented as a touch screen to receive an input signal from a user. The touch panel includes one or more touch sensors to sense touches, sliding, and gestures on the touch panel. The touch sensor may not only sense a boundary of a touch or sliding action, but also detect a duration and pressure associated with the touch or sliding action. In some embodiments, the multimedia component 308 includes a front-facing camera and/or a rear-facing camera. When the apparatus 300 is in an operation mode, such as in a photographing mode or a video mode, the front-facing camera and/or the rear-facing camera may receive external multimedia data. Each front camera and the rear camera may be a fixed optical lens system or have a focal length and an optical zoom capability.

The audio component 310 is configured to output and/or input an audio signal. For example, the audio component 310 includes a microphone (MIC) configured to receive an external audio signal when the apparatus 300 is in an operating mode, such as a call mode, a recording mode, and a speech recognition mode. The received audio signal may be further stored in the memory 304 or transmitted via the communication component 316. In some embodiments, the audio component 310 further includes a speaker configured to output an audio signal.

The I/O interface 312 provides an interface between the processing component 302 and the peripheral interface module, and the peripheral interface module may be a keyboard, a click wheel, a button, or the like. The buttons may include, but are not limited to, a home button, a volume button, a start button, and a lock button.

The sensor component 314 includes one or more sensors for providing status assessments of various aspects for the apparatus 300. For example, the sensor component 314 may detect the open/closed status of the apparatus 300, the relative positioning of the components. For example, the components are the display and the keypad of the apparatus 300. The sensor component 314 may also detect a change in the position of the apparatus 300 or a component of the apparatus 300, the presence or absence of contact between the user and the apparatus 300, orientation or acceleration/deceleration of the apparatus 300, and the temperature change of the apparatus 300. The sensor component 314 may include a proximity sensor configured to detect the presence of nearby objects without any physical contact. The sensor component 314 may also include a light sensor, such as a CMOS or CCD image sensor, for use in an imaging application. In some embodiments, the sensor component 314 may further include an acceleration sensor, a gyroscope sensor, a magnetic sensor, a pressure sensor, or a temperature sensor.

The communication component 316 is configured to facilitate wired or wireless communication between the apparatus 300 and other devices. The apparatus 300 may access a wireless network based on a communication standard, such as WiFi, 2G, or 3G, or a combination of them. In one exemplary embodiment, communication component 316 receives broadcast signals or broadcast related information from an external broadcast management system via a broadcast channel. In one exemplary embodiment, the communication component 316 further includes a near field communication (NFC) module to facilitate short-range communication. For example, the NFC module may be implemented based on a radio frequency identification (RFID) technology, an infrared data association (IrDA) technology, an ultra-wideband (UWB) technology, a Bluetooth (BT) technology, and other technologies.

In an exemplary embodiment, the apparatus 300 may be implemented by one or more application specific integrated circuits (ASIC), digital signal processors (DSP), digital signal processing devices (DSPD), programmable logic devices (PLD), field programmable gate arrays (FPGA), controllers, microcontrollers, microprocessors, or other electronic components for performing the methods described above.

In an exemplary embodiment, there is further provided a non-transitory computer-readable storage medium including instructions, for example, a memory 304 including instructions, which may be executed by the processor 320 of the apparatus 300 to complete the foregoing method. For example, the non-transitory computer-readable storage medium may be a ROM, a random access memory (RAM), a CD-ROM, a magnetic tape, a soft disk, an optical data storage device, etc.

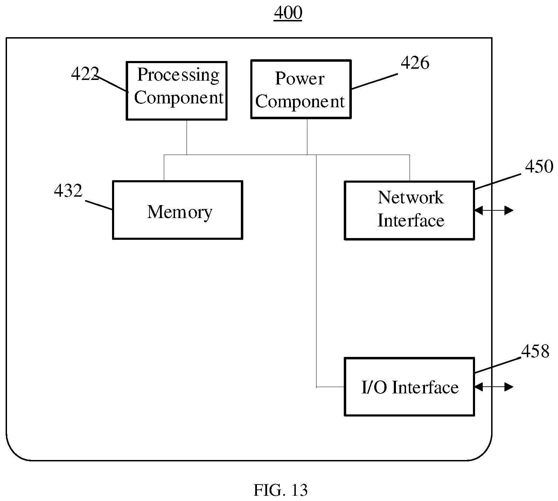

FIG. 13 is a block diagram of an apparatus 400 for WLAN sensing illustrated according to an exemplary embodiment. For example, the apparatus 400 may be provided as a server. Referring to FIG. 12, the apparatus 400 includes a processing component 422 that further includes one or more processors, and memory resources represented by the memory 432 for storing instructions executable by the processing component 422, such as an application. The application stored in the memory 432 may include one or more modules each corresponding to a set of instructions. In addition, the processing component 422 is configured to execute an instruction to execute the foregoing method for WLAN sensing.

The apparatus 400 may also include a power component 426 configured to perform power management of the apparatus 400, one wired or wireless network interface 450 configured to connect the apparatus 400 to a network, and an input-output (I/O) interface 458. The apparatus 400 may operate based on an operating system stored in the memory 432, such as Windows ServerTM, Mac OS XTM, UnixTM, LinuxTM, FreeBSDTM, or the like.

It can be further understood that "a plurality" in the present disclosure refers to two or more, and the other quantifiers are similar to it. "And/or " describes the association relationship of the associated object, indicating that there can be three types of relationships. For example, A and/or B, can represent three situations of: the existence of A alone, the existence of A and B simultaneously, and the existence of B alone. The character "/"generally indicates that the associated objects before and after are in an "or" relationship. The singular forms of "a", "said", and "the" are also intended to include the plural form, unless the context clearly indicates other meanings.

It can be further understood that the terms "first", "second", etc. are used to describe various information, but the information should not be limited to these terms. These terms are only used to distinguish the same type of information from each other and do not indicate a specific order or degree of importance. In fact, expressions such as "first" and "second" can be used interchangeably. For example, without departing from the scope of the present disclosure, the first information can also be referred to as the second information, and similarly, the second information can also be referred to as the first information.

It can be further understood that although the operations are described in a specific order in the accompanying drawings, they should not be understood as requiring the execution of these operations in the specific or serial order as shown, or requiring the execution of all the operations as shown to obtain the desired results. In specific environments, multitasking and parallel processing may be advantageous.

Those skilled in the art will easily come up with other embodiments of the present disclosure after considering the specification and practicing the invention disclosed here. The purpose of the application is to cover any variations, uses, or adaptations of the present disclosure, which follow the general principles of the present disclosure and include common knowledge or conventional technical means in the technical field that are not disclosed in the present disclosure. The specification and embodiments are only considered exemplary, and the true scope and spirit of the present disclosure are indicated by the following claims.

It should be understood that the present disclosure is not limited to the precise structure already described above and shown in the accompanying drawings, and various modifications and changes can be made without departing from its scope. The scope of the present disclosure is limited only by the accompanying claims.

## Claims

1. A method for WLAN sensing, applied to a station, comprising:
determining a WLAN sensing period request frame, the WLAN sensing period request frame comprising a first period information element for the station to perform WLAN sensing, and the first period information element being used to perform periodic WLAN sensing by the station; and
sending the WLAN sensing period request frame.

2. The method for WLAN sensing according to claim 1, further comprising:
receiving a WLAN sensing period response frame, the WLAN sensing period response frame comprising a second period information element of a wireless access point (AP); and
determining, in response to the second period information element being the same as the first period information element, to periodically initiate a WLAN sensing message.

3. The method for WLAN sensing according to claim 1, wherein the WLAN sensing period request frame comprises at least one of following:
a period information element ID, a byte length, a WLAN sensing period offset, a WLAN sensing duration, a WLAN sensing interval, a number of WLAN sensing repetition, and connection information.

4. The method for WLAN sensing according to claim 3, wherein the WLAN sensing period offset is determined based on a first WLAN sensing period and a target beacon transmission time.

5. The method for WLAN sensing according to claim 3, wherein the WLAN sensing duration is determined based on a WLAN sensing period.

6. The method for WLAN sensing according to claim 3, wherein the WLAN sensing interval is determined based on an interval sent between continuous WLAN sensing periods.

7. The method for WLAN sensing according to claim 3, wherein the number of WLAN sensing repetition is determined based on a number of the WLAN sensing period request frame.

8. The method for WLAN sensing according to claim 3, wherein a number of times of sending the first period information element is determined based on the number of WLAN sensing repetition; or
the number of times of sending the first period information element is determined based on a WLAN sensing application.

9. The method for WLAN sensing according to claim 1, further comprising:
receiving first information, the first information identifying WLAN sensing capability information supported by the AP.

10. The method for WLAN sensing according to claim 1, further comprising:
sending second information, the second information identifying WLAN sensing capability information supported by the station.

11. The method for WLAN sensing according to claim 2, wherein the second period information element comprises at least one of following:
a period information element ID, a byte length, a WLAN sensing period offset, a WLAN sensing duration, a WLAN sensing interval, a number of WLAN sensing repetition, connection information, and a status code.

12. The method for WLAN sensing according to claim 11, wherein the status code is determined based on the first period information element and the second period information element.

13. A method for WLAN sensing, applied to a wireless access point (AP), comprising:
receiving a WLAN sensing period request frame, the WLAN sensing period request frame comprising a first period information element for a station to perform WLAN sensing, and the first period information element being used to perform periodic WLAN sensing by the station.

14. The method for WLAN sensing according to claim 13, further comprising:
determining to accept the WLAN sensing period request frame, and setting a second period information element to be the same as the first period information element.

15. The method for WLAN sensing according to claim 14, further comprising:
sending a WLAN sensing period response frame, the WLAN sensing period response frame comprising the second period information element of the wireless access point (AP).

16. The method for WLAN sensing according to claim 13 or 14, wherein the WLAN sensing period request frame comprises at least one of following:
a period information element ID, a byte length, a WLAN sensing period offset, a WLAN sensing duration, a WLAN sensing interval, a number of WLAN sensing repetition, and connection information.

17. The method for WLAN sensing according to claim 15, wherein the WLAN sensing period offset is determined based on a first WLAN sensing period and a target beacon transmission time.

18. The method for WLAN sensing according to claim 15, wherein the WLAN sensing duration is determined based on a WLAN sensing period.

19. The method for WLAN sensing according to claim 15, wherein the WLAN sensing interval is determined based on an interval sent between continuous WLAN sensing periods.

20. The method for WLAN sensing according to claim 15, wherein the number of WLAN sensing repetition is determined based on a number of the WLAN sensing period request frame.

21. The method for WLAN sensing according to claim 15, wherein a number of times of sending the first period information element is determined based on the number of WLAN sensing repetition; or
the number of times of sending the first period information element is determined based on a WLAN sensing application.

22. The method for WLAN sensing according to claim 13, further comprising:
sending first information, the first information identifying WLAN sensing capability information supported by the AP.

23. The method for WLAN sensing according to claim 13, further comprising:
receiving second information, the second information identifying WLAN sensing capability information supported by the station.

24. The method for WLAN sensing according to claim 14 or 15, wherein the second period information element comprises at least one of following:
a period information element ID, a byte length, a WLAN sensing period offset, a WLAN sensing duration, a WLAN sensing interval, a number of WLAN sensing repetition, connection information, and a status code.

25. The method for WLAN sensing according to claim 24, wherein the status code is determined based on the first period information element and the second period information element.

26. An apparatus for WLAN sensing, applied to a station, comprising:
a determination module, configured to determine a WLAN sensing period request frame, the WLAN sensing period request frame comprising a first period information element for the station to perform WLAN sensing, and the first period information element being used to perform periodic WLAN sensing by the station; and
a sending module, configured to send the WLAN sensing period request frame.

27. An apparatus for WLAN sensing, applied to a wireless access point (AP), comprising:
a receiving module, configured to receive a WLAN sensing period request frame, the WLAN sensing period request frame comprising a first period information element for the station to perform WLAN sensing, and the first period information element being used to perform periodic WLAN sensing by the station.

28. An apparatus for WLAN sensing, comprising:
a processor;
a memory, configured for storing an instruction executable by the processor;
wherein the processor is configured to execute the method for WLAN sensing according to any one of claims 1-12, or configured to execute the method for WLAN sensing according to any one of claims 13-25.

29. A non-transitory computer-readable storage medium, wherein, when an instruction in the storage medium is executed by a processor of a mobile terminal, the mobile terminal is enabled to execute the method for WLAN sensing according to any one of claims 1-12, or the mobile terminal is enabled to execute the method for WLAN sensing according to any one of claims 13-25.
